# EUROPÄISCHE PATENTSCHRIFT

(11) **EP 3 298 305 B1**
(45) Veröffentlichungstag und Bekanntmachung des Hinweises auf die Patenterteilung: **25.03.2020**
(21) Anmeldenummer: 16719831.6
(22) Anmeldetag: 25.04.2016
(51) Int. Cl.: F16H 61/00, B60K 23/08

(54) **KRAFTFAHRZEUG-ANTRIEBSSTRANG UND ANSTEUERVERFAHREN**
MOTOR VEHICLE POWERTRAIN AND ACTUATION METHOD
CHAÎNE CINÉMATIQUE POUR VÉHICULES AUTOMOBILES ET PROCÉDÉ DE COMMANDE

(30) Priorität: 21.05.2015 DE 102015108031
(43) Veröffentlichungstag der Anmeldung: 28.03.2018
(73) Patentinhaber: Magna PT B.V. & Co. KG, 74199 Untergruppenbach (DE)
(72) Erfinder: RUEHLE, Guenter, 74369 Loechgau (DE); ROTHVOSS, Stefan, 74211 Leingarten (DE)
(74) Vertreter: Rausch, Gabriele
(86) Internationale Anmeldenummer: PCT/EP2016/059175
(87) Internationale Veröffentlichungsnummer: WO 2016/184644

(56) Entgegenhaltungen:
- WO-A1-2006/004525
- DE-A1-102011 105 456
- US-A- 5 819 192

## Beschreibung

Die vorliegende Erfindung betrifft einen Antriebsstrang für ein Kraftfahrzeug, mit einem Antriebsmotor wie einem Verbrennungsmotor zum Bereitstellen von Antriebsleistung, mit einer Getriebeanordnung zum Einrichten eines Übersetzungsverhältnisses zwischen dem Antriebsmotor und Antriebsrädern, mit einer Hydraulikanordnung zum Betätigen von Komponenten der Getriebeanordnung, wobei die Hydraulikanordnung eine Hauptpumpe aufweist, die mit einem hydraulischen Verbraucherabschnitt verbunden ist, und wobei die Hydraulikanordnung eine Sekundärpumpe aufweist, die bedarfsweise von einem Sekundärpumpen-Elektromotor angetrieben ist und die mit dem Verbraucherabschnitt verbunden ist.

Ferner betrifft die vorliegende Erfindung ein Verfahren zum Betreiben eines Fahrzeugs mit einem Antriebsstrang der genannten Art.

Bei Antriebssträngen der gattungsgemäßen Art wird die Hauptpumpe in der Regel von dem Antriebsmotor angetrieben, der meist als Verbrennungsmotor ausgebildet ist. In dieser Konstellation kann die Hauptpumpe einen Hydraulikdruck zur Versorgung des hydraulischen Verbraucherabschnittes nur dann bereitstellen, wenn der Antriebsmotor in Betrieb ist, der Verbrennungsmotor also gezündet ist und mit einer Drehzahl läuft, die größer gleich der Leerlaufdrehzahl ist.

Seit einigen Jahren sind Kraftfahrzeuge mit sog. Start-Stopp-Systemen ausgestattet. Hierbei wird der Verbrennungsmotor bei einem Anhalten des Fahrzeugs außer Betrieb gesetzt. Erst wenn das Fahrzeug wieder anfährt, was bspw. durch ein Lösen eines Bremspedals oder dergleichen erfasst wird, wird der Verbrennungsmotor wieder in Betrieb gesetzt, d.h. mittels eines Anlassers gestartet.

Ferner ist insbesondere bei Hybrid-Fahrzeugen, die ein Antriebsmotorkonzept aufweisen, dass einen Verbrennungsmotor und einen elektrischen Antriebsmotor beinhaltet, ein sog. Segelmodus realisierbar. Hierbei wird das Kraftfahrzeug bei gleichförmigen Fahrzuständen in einen Betriebszustand versetzt, bei dem der Verbrennungsmotor abgeschaltet wird und die Antriebsleistung zur Überwindung eines Luftwiderstandes und/oder eines Rollwiderstandes ggf. mittels des elektrischen Antriebsmotors bereitgestellt wird. Ein Segelmodus ist jedoch auch bei Fahrzeugen ohne Hybridantrieb einsetzbar. In diesem Fall erfolgt die Überwindung des Luft- und des Rollwiderstandes durch die kinetische und/oder die potentielle Energie des Fahrzeugs. Gegebenenfalls wird auch eine Verringerung der Fahrgeschwindigkeit begrenzt in Kauf genommen.

In beiden Betriebszuständen, d.h. bei einem Stopp des Kraftfahrzeugs, das mit einem Start-Stopp-System ausgestattet ist, sowie im Segelmodus, wird der Verbrennungsmotor abgeschaltet, während das Fahrzeug insgesamt in einem Betriebsmodus ist (d.h. nicht abgestellt werden soll bzw. nicht in einen Parkmodus versetzt werden soll).

Sofern die Hauptpumpe von einem Verbrennungsmotor angetrieben ist, kann die Hauptpumpe in diesen Betriebszuständen kein Hydraulikfluid zum Versorgen des hydraulischen Verbraucherabschnittes bereitstellen, kann also bspw. nicht dazu verwendet werden, um Komponenten der Getriebeanordnung zu betätigen und/oder zu kühlen bzw. zu schmieren.

Zu diesem Zweck weist die Hydraulikanordnung eine Sekundärpumpe auf, die bedarfsweise von einem Sekundärpumpen-Elektromotor angetrieben ist und die ebenfalls mit dem hydraulischen Verbraucherabschnitt verbunden ist. In den genannten Situationen wird dann die Sekundärpumpe von dem Sekundärpumpen-Elektromotor angetrieben und dazu verwendet, um zumindest einen Teil der Funktionen der Hauptpumpe zu übernehmen, also bspw. bestimmte Komponenten der Getriebeanordnung zu kühlen und/oder zu schmieren, und ggf. Komponenten zu betätigen.

Die zu betätigenden Komponenten der Getriebeanordnung können Schaltkupplungen zum Ein- und Auslegen von Gangstufen sein, können jedoch auch eine oder mehrere Kupplungen beinhalten, die zwischen dem Antriebsmotor und einem Getriebe der Getriebeanordnung angeordnet sind.

Auf dem Gebiet der Kraftfahrzeuge ist es ferner bekannt, die Antriebsleistung auf eine Achse zu führen, oder aber zwei oder mehr Achsen des Kraftfahrzeuges anzutreiben ("Allradantrieb").

Allrad-Antriebsstränge beinhalten in der Regel eine Leistungsverzweigungseinrichtung, mit der Antriebsleistung variabel auf zwei Achsen des Kraftfahrzeuges verteilt werden kann. In manchen Fällen wird Antriebsleistung immer zu einer Achse geführt, und Antriebsleistung wird nur bedarfsweise der zweiten Achse zugeführt (sog. "Hang-on"- Systeme). Die "Hang-on"-Funktion kann bspw. von einer hydraulisch oder elektromotorisch betätigten Lamellenkupplung erfüllt werden, die in diesem Fall eine Leistungsverzweigungseinrichtung bildet. Bei anderen Ausführungsformen weist ein solcher Antriebsstrang eine Leistungsverzweigungseinrichtung auf, die die gesamte Antriebsleistung des Antriebsmotors entgegennimmt und dann variabel auf die zwei Achsen verteilt. Eine solche Leistungsverzweigungseinrichtung kann bspw. ein Längsdifferential aufweisen, das mittels einer Lamellenkupplung bedarfsweise gesperrt wird. Auch ein solches Längs- differential mit gesteuerter Lamellenkupplung ist eine Leistungsverzweigungseinrichtung im vorliegend verwendeten Sinne.

Andere Leistungsverzweigungseinrichtungen können bspw. zwei Lamellenkupplungen beinhalten, die unabhängig voneinander ansteuerbar sind. Eine Leistungsverzweigungs-einrichtung verteilt die Antriebsleistung variabel und beinhaltet folglich in der Regel eine Leistungsübertragungskupplung wie eine Lamellenkupplung, die bedarfsweise betätigt wird.

Zur Betätigung der Leistungsverzweigungseinrichtung zum Zwecke des variablen Verteilens von Antriebsleistung können, wie oben erwähnt, elektro-hydraulische oder elektro-mechanische Systeme vorgesehen sein. Sofern die Leistungsverzweigungseinrichtung vollständig in das Getriebe integriert ist, kann die Betätigung aus einem Systemdruck (Leitungsdruck) abgeleitet werden, der von der Hauptpumpe mittels eines geeigneten Druckregelventils erzeugt wird. Denn die Funktion der Leistungsverzweigung ist in der Regel nur dann notwendig, wenn der Antriebsmotor in Betrieb ist.

WO 2006/ 004 525 A zeigt einen Antriebstrang für ein Kraftfahrzeug mit einem Antriebsmotor, einer Getriebeanordnung, einer Hydraulikanordnung, wobei diese einen Hauptpumpe und eine elektrisch angetriebene Sekundärpumpe aufweist. Die Sekundärpumpe ist mit einer Leistungsverzweigungseinrichtung zum Variablen Verteilen von Antriebsleistung verbindbar.

Auch aus der US 5 819 192 A ist eine Sekundärpumpe mit elektrischem Antrieb bekannt.

Die DE 10 2011 105 456A zeigt einen hydraulischen Regel- bzw. Steuerkreislauf, wobei der Betrieb durch ein Verbinden einer elektrischen Pumpe direkt mit einem Schiebeventil aktualisiert wird, ohne durch ein manuelles Ventil hindurchzutreten, wobei dies möglich macht, den Betriebsdruck von der elektrischen Pumpe zu der ersten Kupplung zuzuführen.

Es ist eine Aufgabe der Erfindung, einen verbesserten Antriebsstrang für ein Kraftfahrzeug sowie ein verbessertes Verfahren zum Betreiben eines Fahrzeuges anzugeben, wobei gegenüber dem Stand der Technik eine Optimierung zumindest hinsichtlich einem der folgenden Kriterien erreicht werden: Kosten, Bauraum, Gewicht.

Die obige Aufgabe wird durch einen Antriebsstrang gemäß Anspruch 1 gelöst. Dabei ist die Sekundärpumpe mit einer Leistungsverzweigungseinrichtung zum variablen Verteilen von Antriebsleistung verbunden oder verbindbar.

Ferner wird die obige Aufgabe gelöst durch ein Verfahren zum Betreiben eines Kraftfahrzeuges mit einem erfindungsgemäßen Antriebsstrang, mit den Schritten, den Betriebszustand des Antriebsmotors zu erfassen, die Sekundärpumpe zum Betätigen der Leistungsverzweigungseinrichtung anzusteuern, wenn der Antriebsmotor in Betrieb ist und wenn wenigstens eine weitere Bedingung erfüllt ist, wobei die Sekundärpumpe zum Versorgen des Verbraucherabschnittes angesteuert wird, wenn der Antriebsmotor außer Betrieb ist und wenn wenigstens eine weitere Bedingung erfüllt ist.

Der erfindungsgemäße Antriebsstrang und das erfindungsgemäße Verfahren zum Betreiben eines Kraftfahrzeuges gehen von dem Gedanken aus, dass eine Sekundärpumpe in einer Hydraulikanordnung dann, wenn der Antriebsmotor in Betrieb ist, in der Regel nicht zur Versorgung des Verbraucherabschnittes benötigt ist und folglich zur Betätigung der Leistungsverzweigungseinrichtung zum variablen Verteilen von Antriebsleistung verwendbar ist, also bspw. zum Betätigen einer Leistungsverzweigungskupplung der Leistungsverzweigungseinrichtung.

Dabei versteht sich, dass die Hauptpumpe vorzugsweise von dem Antriebsmotor angetrieben ist, bei dem es sich vorzugsweise um einen Verbrennungsmotor handelt. Der Verbraucherabschnitt beinhaltet vorzugsweise eine Systemdruckbereitstellungseinrichtung, die aus dem von der Hauptpumpe und der Sekundärpumpe bereitgestellten Hydraulikdruck einen Systemdruck erzeugt. Die Systemdruckbereitstellungseinrichtung beinhaltet hierzu ein Druckregelventil. Aus dem so erzeugten Systemdruck, der bspw. auch mittels eines Druckspeichers stabilisiert sein kann, können dann die erforderlichen Drücke und/oder Fluidströme zum Betätigen bzw. Versorgen von Komponenten der Getriebeanordnung und/oder weiterer Komponenten des Antriebsstranges abgeleitet werden.

Die Leistungsverzweigungseinrichtung kann eine Hang-on-Kupplung sein, kann jedoch auch eine Sperrkupplung eines Zentral- bzw. Längsdifferentials des Antriebsstranges sein. Die Leistungsverzweigungseinrichtung dient insbesondere zur Verteilung von Antriebsleistung auf zwei angetriebene Achsen des Kraftfahrzeuges. Die Getriebeanordnung kann ein Stufengetriebe oder ein stufenloses Getriebe beinhalten, und weist vorzugsweise einen Wandlerautomat, ein automatisiertes Schaltgetriebe oder ein Doppelkupplungsgetriebe auf.

Die Hauptpumpe wird vorzugsweise von dem Verbrennungsmotor angetrieben, insbesondere über einen sog. Nebenantrieb. Die Hauptpumpe könnte jedoch auch von einem Hauptpumpen-Elektromotor angetrieben sein.

Die Sekundärpumpe dient zum Bereitstellen von Hydraulikfluid für den hydraulischen Verbraucherabschnitt, und kann dazu ausgelegt sein, die Funktion der Hauptpumpe wenigstens teilweise zu ersetzen, wenn die Hauptpumpe nicht im Betrieb ist, kann jedoch auch dazu ausgelegt sein, die Funktion der Hauptpumpe generell zu ergänzen.

Die Sekundärpumpe kann vorzugsweise bei angetriebener Hauptpumpe dazu verwendet werden, um die Leistungsverzweigungseinrichtung mit Hydraulikfluid zu versorgen bzw. eine darin enthaltene Leistungsverzweigungskupplung zu betätigen.

Wenn bei dem erfindungsgemäßen Verfahren der Antriebsmotor außer Betrieb ist, also bspw. der Verbrennungsmotor abgeschaltet ist, kann ein Betriebszustand auftreten, bei dem die Hauptpumpe nicht angetrieben ist. In diesem Fall wird die Sekundärpumpe bedarfsweise mittels des zugeordneten Sekundärpumpen-Elektromotors angetrieben, um Hydraulikfluid für den hydraulischen Verbraucherabschnitt bereitzustellen.

Die Sekundärpumpe ist über eine Ventilanordnung mit der Leistungsverzweigungseinrichtung verbunden.

Die Ventilanordnung weist dabei keine Proportionalventile auf, die eine erhöhte Reinheit bei der Montage erfordern. Die Ventilanordnung beinhaltet ein Wegeventil mit wenigstens einer ersten Stellung und einer zweiten Stellung, wobei die Sekundärpumpe in der zweiten Stellung mit der Leistungsverzweigungseinrichtung verbunden ist.

Bei dieser Ausgestaltung ist vorzugsweise vorgesehen, dass die Sekundärpumpe in der ersten Stellung nicht mit der Leistungsverzweigungseinrichtung verbunden ist.

Das Wegeventil weist zum Einrichten der ersten und/oder der zweiten Stellung einen ersten und einen zweiten hydraulischen Betätigungsanschluss auf.

Hierbei erfolgt die Betätigung hydraulisch über eine Vorsteuerfläche.

Von Vorzug ist es, wenn beide Stellungen über zwei entgegengesetzt wirkende hydraulische Betätigungsanschlüsse einrichtbar sind. Der erste und der zweite hydraulische Betätigungsanschluss wirken dabei vorzugsweise in entgegengesetzte Richtungen.

Der erste und der zweite hydraulische Betätigungsanschluss können dabei Vorsteuerflächen aufweisen, die gleich groß sind, so dass die erste Stellung eingerichtet wird, wenn ein Druck an dem zweiten Betätigungsanschluss größer ist als ein Druck an dem ersten Betätigungsanschluss. Ferner wird die zweite Stellung eingerichtet, wenn ein Druck an dem ersten Betätigungsanschluss größer ist als ein Druck an dem zweiten Betätigungsanschluss.

Die Vorsteuerflächen können in einer bevorzugten Ausführungsform unterschiedlich groß sein, so dass der Druckvergleich an dem ersten und dem zweiten Betätigungsanschluss nicht absolut ist, sondern eine Funktion der Vorsteuerflächen ist (basierend auf dem Prinzip, dass eine von einem hydraulischen Betätigungsanschluss ausgeübte Kraft das Produkt aus dem erfahrenen Betätigungsdruck und der effektiven jeweiligen Vorsteuerfläche ist).

Der erste Betätigungsanschluss ist zum Einrichten der zweiten Stellung mit einem Druckanschluss der Hauptpumpe verbunden.

Ferner ist es jeweils vorteilhaft, wenn der zweite hydraulische Betätigungsanschluss zum Einrichten der ersten Stellung des Wegeventils mit einem Druckanschluss der Sekundärpumpe verbunden ist.

Die Stellung des Wegeventils hängt folglich von einem Vergleich der von den Pumpen (Hauptpumpe und Sekundärpumpe) bereitgestellten Drücken ab. Wenn in diesem Ausführungsbeispiel die Sekundärpumpe außer Betrieb ist und die Hauptpumpe in Betrieb ist, ist die zweite Stellung eingerichtet, in der die Sekundärpumpe vorzugsweise mit der Leistungsverzweigungseinrichtung verbunden ist.

Wenn andererseits die Hauptpumpe nicht in Betrieb ist, also bspw. von einem Verbrennungsmotor nicht angetrieben ist, und die Sekundärpumpe angetrieben ist, ist der von der Sekundärpumpe bereitgestellte Druck größer, so dass sich das Wegeventil in der ersten Stellung befindet. In der ersten Stellung ist die Sekundärpumpe vorzugsweise mit dem Verbraucheranschluss verbunden.

Das Wegeventil kann bspw. ein 3/2-Wegeventil oder ein 4/2-Wegeventil sein.

Da zwischen der Sekundärpumpe und der Leistungsverzweigungseinrichtung ein Wegeventil angeordnet ist, kann der Druckanschluss der Sekundärpumpe auch über das Wegeventil mit dem Verbraucherabschnitt verbunden sein. In einer Variante kann der Druckanschluss der Sekundärpumpe jedoch auch nicht über das Wegeventil sondern über ein Rückschlagventil mit dem hydraulischen Verbraucherabschnitt verbunden sein.

Folglich ist es in manchen Ausführungsformen vorteilhaft, wenn ein Druckanschluss der Sekundärpumpe über ein Rückschlagventil mit dem Verbraucherabschnitt verbunden ist.

Bei den obigen Ausführungsformen ist die Sekundärpumpe vorzugsweise als unidirektionale Pumpe ausgebildet, die einen dedizierten Druckanschluss und einen dedizierten Sauganschluss aufweist, wobei Letzterer vorzugsweise direkt mit einem Fluidsumpf verbunden ist (ggf. über ein Filter).

In einer weiteren Ausführungsform ist die Sekundärpumpe als bidirektionale Pumpe mit einem ersten und einem zweiten Anschluss ausgebildet, wobei der erste Anschluss mit dem hydraulischen Verbraucherabschnitt verbunden ist und wobei der zweite Anschluss mit der Leistungsverzweigungseinrichtung verbunden ist.

Bei dieser Ausführungsform sind die zwei Anschlüsse der bidirektionalen Pumpe nicht dediziert als Sauganschluss oder als Druckanschluss ausgebildet, sondern können je nach Drehrichtung einen Sauganschluss oder einen Druckanschluss bilden.

In einer Drehrichtung der Pumpe wird folglich von der Sekundärpumpe Fluid für den Verbraucherabschnitt bereitgestellt. In der anderen Drehrichtung der Pumpe wird Fluid von der Sekundärpumpe für die Leistungsverzweigungseinrichtung bereitgestellt.

Diese Ausgestaltung ist vorteilhaft, da ein Wegeventil zur Verteilung von Hydraulikfluid in der Regel nicht erforderlich ist. Allerdings können die Aufwendungen hinsichtlich der Kanalführung vergrößert sein. Dies kann jedoch ggf. noch verhindert werden, wenn man als Sekundärpumpe eine Gerotorpumpe mit Umschlagring verwendet. Bei einer derartigen Gerotorpumpe mit Umschlagring bleibt der Sauganschluss immer gleich, nur der Druckanschluss kann durch den Umschlagring gewechselt werden. Das Umschlagen des Umschlagringes kann aktuatorisch initiiert werden. Vorzugsweise erfolgt das Umschlagen des Umschlagringes jedoch aufgrund von fluidischer Reibung bei einer Drehrichtungsumkehr des Sekundärpumpen-Elektromotors.

In der Regel sind die Anschlüsse der Sekundärpumpe dabei insbesondere über Rückschlagventile mit dem Fluidsumpf verbunden, um einen hydraulischen Kurzschluss der Sekundärpumpe zu vermeiden.

Die Sekundärpumpe kann dazu verwendet werden, um die Leistungsverzweigungseinrichtung von einem Zustand in einen zweiten Zustand zu versetzen, also bspw. ein Längsdifferential zu sperren oder zu entsperren.

Von besonderem Vorzug ist es jedoch, wenn die Sekundärpumpe dazu angesteuert werden kann, um die Verteilung von Antriebsleistung in der Leistungsverzweigungseinrichtung bedarfsweise variabel einzustellen.

In modernen Antriebssträngen erfolgt die Verteilung von Antriebsleistung auf zwei Achsen in der Regel in Abhängigkeit von einer Vielzahl von Parametern, einschließlich bspw. Schlupf an bestimmten Rädern. In der Regel wird eine Leistungsverzweigungskupplung in der Leistungsverzweigungseinrichtung daher bedarfsweise angesteuert. Vorliegend kann die Sekundärpumpe durch Einstellen der Drehzahl des Sekundärpumpen-Elektromotors dazu verwendet werden, um bspw. den Betätigungsdruck auf eine Leistungsverzweigungskupplung der Leistungsverzweigungseinrichtung über einen weiten Bereich regeln zu können, derart, dass die Leistungsverzweigungskupplung auch schlupfend betrieben werden kann.

Vorteilhafterweise wird dabei das auf die zwei Achsen verteilte Drehmoment geregelt.

Bei dem erfindungsgemäßen Verfahren erfolgt das Ansteuern der Sekundärpumpe zum Betätigen der Leistungsverzweigungseinrichtung dann, wenn der Antriebsmotor im Betrieb ist und wenn wenigstens eine weitere Bedingung erfüllt ist. Die weitere Bedingung kann in diesem Fall eine Anforderung von einer Fahrdynamiksteuerung sein, dass die Antriebsleistung auf andere Art und Weise zu verteilen ist (bspw. beim Auftreten eines Schlupfes an bestimmten Antriebsrädern). Die weitere Bedingung kann jedoch auch beinhalten, dass die Fahrzeuggeschwindigkeit größer ist als eine Schwelle, insbesondere größer ist als 0 km/h. Mit anderen Worten wird die Leistungsverzweigungseinrichtung vorzugsweise dann nicht betätigt, wenn das Fahrzeug steht.

Zum Weiteren wird die Sekundärpumpe dazu angesteuert, den hydraulischen Verbraucherabschnitt anzusteuern, wenn der Antriebsmotor außer Betrieb ist und wenn wenigstens eine weitere Bedingung erfüllt ist. Diese weitere Bedingung kann bspw. ein Anforderungssignal aus dem hydraulischen Verbraucherabschnitt sein, um bei nicht in Betrieb befindlicher Hauptpumpe den Systemdruck aufrechtzuerhalten und/oder einen Kühlvolumenstrom bereitzustellen oder dergleichen.

Insgesamt kann mit der Erfindung folglich ein Nutzen aus der Tatsache gezogen werden, dass die Anforderungen
- Aufrechterhalten eines Systemdrucks bei stehendem Antriebsmotor (d.h. Betrieb der Sekundärpumpe als Zusatzpumpe) und
- Schließen einer Leistungsverzweigungskupplung durch Druckbeaufschlagung im Fahrbetrieb nicht gleichzeitig erfüllt werden müssen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung eines Kraftfahrzeug-Antriebsstranges gemäß einer Ausführungsform im Stand der Technik;
Fig. 2 einen Ausschnitt aus einem weiteren erfindungsgemäßen Antriebsstrang;
Fig. 3 einen Ausschnitt aus einem weiteren erfindungsgemäßen Antriebsstrang; und
Fig. 4 ein Diagramm von Druck über Zeit bei verschiedenen Betriebszuständen eines erfindungsgemäßen Antriebsstranges.

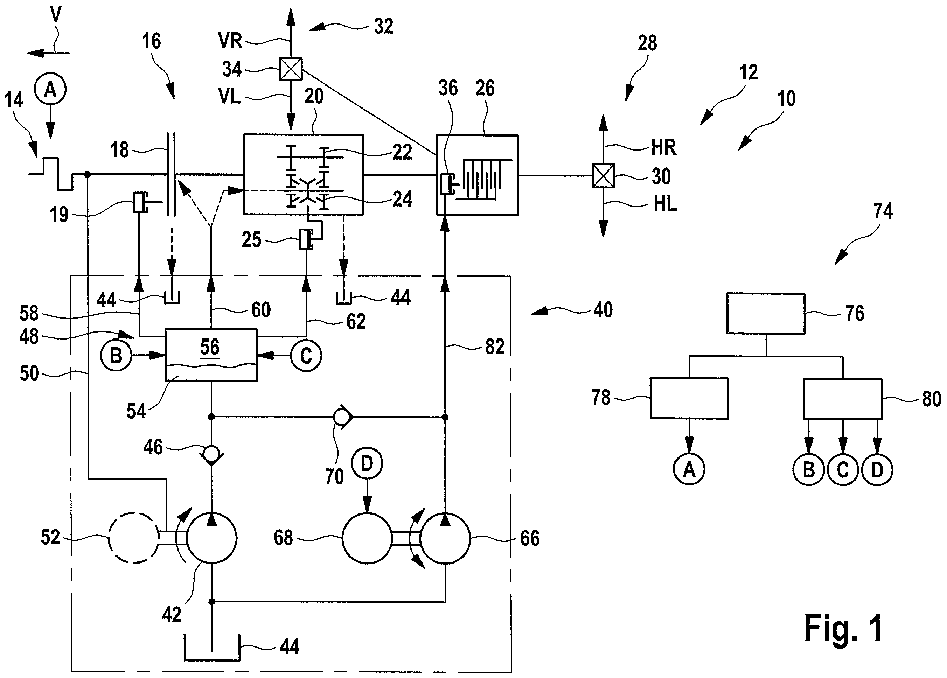

In Fig. 1 ist in schematischer Form ein Kraftfahrzeug 10 dargestellt, das einen Antriebsstrang 12 aufweist.

Der Antriebsstrang 12 weist einen Antriebsmotor 14 auf, der vorliegend als Verbrennungsmotor ausgebildet ist. Der Antriebsmotor 14 könnte jedoch auch als Hybrid-Antriebseinheit ausgebildet sein. Eine Ausgangswelle des Antriebsmotors 14 ist mit einer Getriebeanordnung 16 verbunden. Die Getriebeanordnung 16 beinhaltet meist eine Kupplungseinrichtung 18, deren Eingangsglied mit der Ausgangswelle des Antriebsmotors 14 verbunden ist. Die Kupplungseinrichtung 18 kann als einfache Reibkupplung ausgebildet sein, in Form einer Anfahr- und Trennkupplung, kann jedoch auch als Doppelkupplungsanordnung für ein Doppelkupplungsgetriebe ausgebildet sein. Die Kupplungseinrichtung 18 wird mittels einer schematisch angedeuteten Kupplungsaktuatorik 19 automatisiert betätigt.

Die Getriebeanordnung 16 beinhaltet ferner ein Getriebe 20, bei dem es sich um ein stufenloses Getriebe oder um ein Stufengetriebe handeln kann. Beispielsweise kann das Getriebe 16 ein Wandler-Automatikgetriebe sein, ein automatisiertes Schaltgetriebe oder ein Doppelkupplungsgetriebe. Es kann sich jedoch auch um ein CVT-Getriebe oder dergleichen handeln.

Vorliegend ist das Getriebe 20 durch ein Stufengetriebe in Vorgelegebauweise ausgeführt, das eine Mehrzahl von Radsätzen 22 aufweist, die mittels Schaltkupplungen 24 in an sich bekannter Weise in den Leistungsfluss geschaltet werden können, um Gangstufen ein- und auszulegen. Die Schaltkupplungen 24 werden automatisiert mittels einer geeigneten Getriebeaktuatorik 25 betätigt. Die Kupplungsaktuatorik 19 und die Getriebeaktuatorik 25 sind vorliegend als hydraulische Aktuatoreinrichtungen ausgebildet.

Ein Ausgang des Getriebes 20 ist mit einer Leistungsverzweigungseinrichtung 26 verbunden, die als Hang-on-Kupplung, als PTU ("power-take-off'-Einheit) oder dergleichen ausgebildet sein kann. Die Leistungsverzweigungseinrichtung 26 dient dazu, Antriebsleistung nach Bedarf einer ersten Achse 28 und/oder einer zweiten Achse 32 zuzuführen, also die Antriebsleistung auf diese zwei Achsen 28, 32 zu verteilen.

Die erste Achse 28 ist als Hinterachse mit einem ersten Differential 30 ausgebildet, das Antriebsleistung auf angetriebene Hinterräder HL, HR verteilt. Die zweite Achse 32 ist als Vorderachse ausgebildet und weist ein zweites Differential 34 auf, das Antriebsleistung auf angetriebene Vorderräder VL, VR verteilt.

Zur Ansteuerung der Leistungsverzweigungseinrichtung 26 ist eine Verzweigungsaktuato-rik 36 vorgesehen, die vorliegend ebenfalls als hydraulische Aktuatoreinrichtung ausgebildet sein kann, insbesondere mit einer Leistungsverzweigungskupplung, bspw. in Form einer Lamellenkupplung.

Der Antriebsstrang 12 weist ferner eine Hydraulikanordnung 40 auf. Die Hydraulikanordnung 40 beinhaltet eine Hauptpumpe 42, die vorliegend insbesondere als unidirektionale Pumpe ausgebildet ist und einen Sauganschluss aufweist, der mit einem Fluidsumpf 44 verbunden ist, sowie einen Druckanschluss aufweist, der über ein erstes Rückschlagventil 46 mit einem hydraulischen Verbraucherabschnitt 48 verbunden ist.

Die Hauptpumpe 42 wird von dem Antriebsmotor 14 angetrieben, was in Fig. 1 durch einen Nebenantrieb 50 angedeutet ist. Die Hauptpumpe 42 könnte jedoch auch durch einen Hauptpumpen-Elektromotor 52 angesteuert werden, und zwar alternativ oder zusätzlich zu dem Nebenantrieb 50.

Der hydraulische Verbraucherabschnitt 48 beinhaltet eine Systemdruckregelung 54, die den von der Hauptpumpe 42 bereitgestellten Fluiddruck in einen geregelten Systemdruck (Leitungsdruck) umsetzt. Der hydraulische Verbraucherabschnitt 48 weist ferner eine Steuerventilanordnung 56 auf, die aus dem Systemdruck geeignete Steuerdrücke und/oder Kühl- bzw. Schmierfluidströme erzeugt. Die Steuerventilanordnung 56 ist folglich mit einem Steueranschluss 58 verbunden, der mit der Kupplungsaktuatorik 19 verbunden ist. Ferner ist die Steuerventilanordnung 56 mit einem Kühlanschluss 60 verbunden, mittels dessen Kühlfluid für die Kupplungseinrichtung 18 und/oder das Getriebe 20 bereitgestellt werden kann. Schließlich beinhaltet die Steuerventilanordnung 56 vorzugsweise auch einen Steueranschluss 62 für die Getriebeaktuatorik 25. Aus der Kupplungseinrichtung 18 und aus dem Getriebe 20 rücklaufendes Fluid wird in den Fluidsumpf 44 gespeist. Die Systemdruckregelung 54 und die Steuerventilanordnung 56 bilden vorzugsweise ein vollhydraulisches System mit Proportionalventilen.

Wenn die Hauptpumpe 42 von dem Verbrennungsmotor 14 über den Nebenantrieb 50 angetrieben ist, können im Fahrbetrieb des Kraftfahrzeuges 10 Situationen auftreten, bei denen eine Fluidversorgung erforderlich ist, der Verbrennungsmotor jedoch abgeschaltet werden soll, bspw. im Start-Stopp-Betrieb oder beim sog. Segeln. Für diesen Fall ist eine Sekundärpumpe- bzw. Zusatzpumpe vorgesehen, die einen Sauganschluss aufweist, der mit dem Fluidsumpf 44 verbunden ist, und die einen Druckanschluss aufweist. Die Sekundärpumpe 66 wird von einem Sekundärpumpen-Elektromotor 68 angetrieben. Der Antrieb kann vorzugsweise in beiden Richtungen erfolgen. Der Druckanschluss der Sekundärpumpe 66 ist über ein zweites Rückschlagventil 70 mit dem hydraulischen Verbraucherabschnitt 48 verbunden. Wenn die Hauptpumpe 42 aus den oben genannten Gründen nicht angetrieben ist, kann bedarfsweise die Sekundärpumpe 66 mittels des Sekundärpumpen-Elektromotors 68 angetrieben werden, um über das zweite Rückschlagventil 70 Hydraulikdruck für den hydraulischen Verbraucherabschnitt 48 bereitzustellen.

Bei 74 ist eine elektronische Steueranordnung gezeigt, die ein Fahrzeugsteuergerät 76, ein Motorsteuergerät 78 und ein Getriebesteuergerät 80 aufweist. Das Motorsteuergerät 78 steuert den Motor, wie es durch "A" angedeutet ist. Das Getriebesteuergerät 80 steuert die Kupplungseinrichtung 18 und das Getriebe 20, wie es bei "B" und "C" angedeutet ist. Die Steuerung der Kupplungseinrichtung 18 und des Getriebes 20 erfolgt hierbei durch Aussteuerung der Steuerventilanordnung 56. Ferner ist das Getriebesteuergerät 80 über "D" mit dem Sekundärpumpen-Elektromotor 68 verbunden, um diesen bedarfsweise anzutreiben.

Die Verbindungen "A" bis "D" können jeweils Steuerleitungen, Sensorleitungen, Energieversorgungsleitungen etc. beinhalten.

Vorliegend ist der Druckanschluss der Sekundärpumpe 66 nicht nur über das zweite Rückschlagventil 70 mit dem hydraulischen Verbraucherabschnitt 48 verbunden, sondern auch direkt, ohne Zwischenschaltung von Ventilen über einen Steueranschluss 82 mit der Verzweigungsaktuatorik 36 der Leistungsverzweigungseinrichtung 26.

Bei Antrieb der Sekundärpumpe 66 kann folglich eine Kupplung der Leistungsverzweigungsanordnung 26 betätigt werden. Die Betätigung kann dabei vorzugsweise geregelt erfolgen, indem die Drehzahl des Sekundärpumpen-Elektromotors 68 und/oder dessen Drehrichtung so eingestellt werden, dass eine gewünschte Verteilung von Antriebsleistung auf die erste Achse 28 und die zweite Achse 32 erfolgt. Eine Kupplung der Leistungsverzweigungsanordnung 26 kann dabei als Reibkupplung (bspw. Lamellenkupplung) ausgebildet sein, die auch schlupfend betrieben werden kann, um die Antriebsleistung bedarfsweise variabel zu verteilen.

Die Leistungsverzweigungseinrichtung 26 kann in ein Gehäuse des Getriebes 20 integriert sein, kann jedoch auch in einem getrennten Gehäuse untergebracht sein. In manchen Fällen kann der Kühlanschluss 60 auch mit der Leistungsverzweigungseinrichtung 26 verbunden sein, um eine darin betätigte Reibkupplung zu kühlen.

Die Leistungsverzweigungseinrichtung 26 kann im Bereich der gleichen Achse wie der Antriebsstrang 12 angeordnet sein, kann jedoch auch im Bereich der anderen Achse angeordnet sein. In Fig. 1 ist die Leistungsverzweigungseinrichtung 26 so dargestellt, dass Antriebsleistung von dem Getriebe 20 auf die zwei Achsen 28, 32 verteilt wird. In manchen Fällen kann die Leistungsverzweigungseinrichtung 26 jedoch auch so ausgebildet sein, dass Antriebsleistung immer zu einer der Achsen 28, 32 übertragen wird, und nur bedarfsweise zu der anderen Achse (sog. "Hang-on-"Kupplung).

Bei dem Antriebsstrang 12 der Fig. 1 kann in einem Zustand, bei dem der Antriebsmotor 14 in Betrieb ist, die Hauptpumpe 42 einen Druck erzeugen, der zur Versorgung des hydraulischen Verbraucherabschnittes 48 hinreichend ist. Während des Fahrbetriebes kann dann die Sekundärpumpe 66 bedarfsweise angetrieben werden, um die Verzweigungsaktuatorik 36 mit Hydraulikdruck zu versorgen. Der von der Sekundärpumpe 66 in diesem Betriebszustand bereitgestellte Druck ist vorzugsweise kleiner als der von der Hauptpumpe 42 bereitgestellte Druck, so dass das zweite Rückschlagventil 70 geschlossen ist.

Wenn die Hauptpumpe 42 nicht angetrieben wird, bspw. während eines Start-Stopp-Betriebes oder während eines Segelns, wird die Sekundärpumpe 66 angetrieben, so dass das zweite Rückschlagventil 70 öffnet und dem hydraulischen Verbraucherabschnitt 48 Hydraulikfluid unter Druck zur Verfügung gestellt wird. Bei der Ausführungsform der Fig. 1 führt dies zu einer möglicherweise nicht gewünschten, jedoch in der Regel unschädlichen Betätigung der Verzweigungsaktuatorik 36.

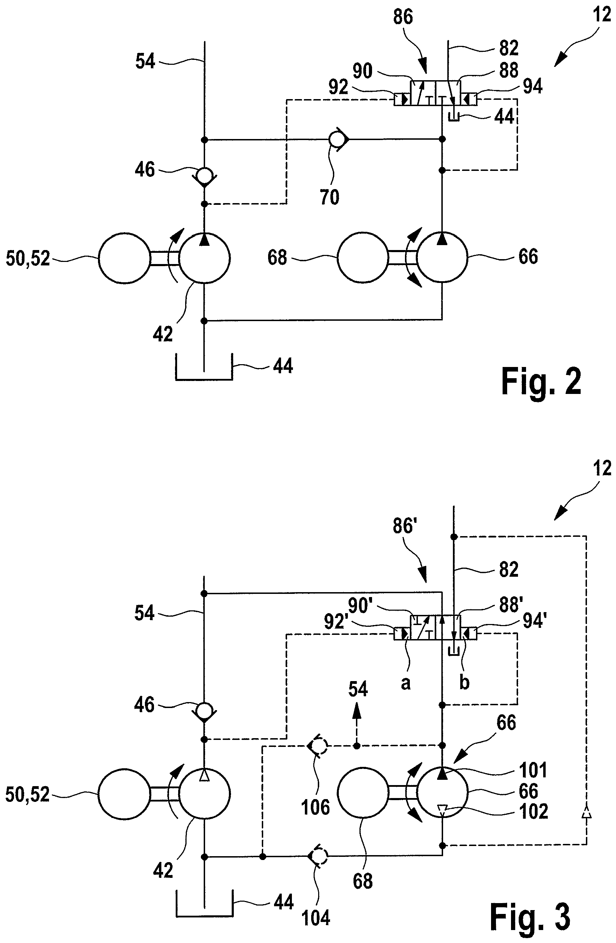

In den Figuren 2 und 3 sind weitere Ausführungsformen von Antriebssträngen 12 dargestellt, die hinsichtlich Aufbau und Funktionsweise generell dem Antriebsstrang 12 der Fig. 1 entsprechen. Gleiche Elemente sind daher durch gleiche Bezugszeichen gekennzeichnet. Im Folgenden werden im Wesentlichen die Unterschiede erläutert.

Bei der Ausführungsform der Fig. 2 ist der Druckanschluss der Sekundärpumpe 66 über eine Ventilanordnung in Form eines Wegeventils 86 mit dem Steueranschluss 82 für die Verzweigungsaktuatorik verbunden. Das Wegeventil 86 weist eine erste Stellung 88 und eine zweite Stellung 90 auf. In der ersten Stellung 88 ist der Druckanschluss der Sekundärpumpe 66 gegenüber dem Steueranschluss 82 gesperrt, und der Steueranschluss 82 ist mit dem Fluidsumpf 44 verbunden. In der zweiten Stellung 90 ist die Sekundärpumpe 66 mit dem Steueranschluss 82 verbunden.

Das Wegeventil 86 wird mittels eines ersten hydraulischen Betätigungsanschlusses 92 von der ersten Stellung 88 in die zweite Stellung 90 betätigt. Ein zweiter hydraulischer Betätigungsanschluss 94 dient zum Versetzen des Wegeventils 86 in die erste Stellung 88. Der erste hydraulische Betätigungsanschluss 92 ist mit dem Druckanschluss der Hauptpumpe 42 verbunden. Der zweite hydraulische Betätigungsanschluss 94 ist mit dem Druckanschluss der Sekundärpumpe 66 verbunden. Wenn folglich die Hauptpumpe 42 nicht angetrieben ist, wird die Sekundärpumpe 66 angetrieben, so dass die erste Stellung 88 eingerichtet wird, so dass die Sekundärpumpe 66 über das zweite Rückschlagventil 70 Fluid an die Systemdruckregelung 54 des Verbraucherabschnittes 48 liefern kann. In diesem Fall erfolgt keine Versorgung der Verzweigungsaktuatorik 36 mit Hydraulikfluid, da die Verbindung zu dem Steueranschluss 82 unterbrochen ist.

Wenn im Fahrbetrieb hingegen die Hauptpumpe 42 angetrieben wird, befindet sich das Wegeventil 86 generell in der zweiten Stellung, bei der die Sekundärpumpe 66 mit dem Steueranschluss 82 verbunden ist. In diesem Fall kann die Sekundärpumpe 66 ausschließlich dazu verwendet werden, um die Verzweigungsaktuatorik 36 mit Fluid zu versorgen. Dies erfolgt generell bei einem Sekundärpumpen-Druck, der kleiner ist als der von der Hauptpumpe 42 bereitgestellte Druck, so dass das zweite Rückschlagventil 70 geschlossen ist und das Wegeventil 86 in der zweiten Stellung 90 bleibt. Folglich kann die Sekundärpumpe 66 angetrieben werden, um die Verzweigungsaktuatorik 36 so mit Hydraulikfluid zu versorgen, dass die Antriebsleistung bedarfsweise variabel verteilt wird. Hierzu kann der Druck am Druckanschluss der Sekundärpumpe 66 ggf. gemessen werden, um diesen zu regeln.

In Fig. 3 ist eine weitere Ausführungsform eines Antriebsstranges 12 gezeigt, der hinsichtlich Aufbau und Funktionsweise generell dem Antriebsstrang 12 der Fig. 2 entspricht. Gleiche Elemente sind daher durch gleiche Bezugszeichen gekennzeichnet. Im Folgenden werden im Wesentlichen die Unterschiede erläutert.

Bei dem Antriebsstrang 12 der Fig. 3 ist das Wegeventil 86' als 4/2 -Wegeventil ausgebildet (wohingegen das Wegeventil 86 der Fig. 2 als 3/2-Wegeventil ausgebildet ist).

Hierdurch kann das Rückschlagventil 70 eingespart werden, derart, dass der Druckanschluss der Sekundärpumpe 66 ausschließlich mit einem Eingangsanschluss des Wegeventils 86' verbunden ist, der in der ersten Stellung 88' mit der Systemdruckregelung 54 des hydraulischen Verbraucherabschnittes 48 verbunden ist und in der zweiten Stellung 90' mit dem Steueranschluss 82 für die Verzweigungsaktuatorik 36 verbunden ist.

Die Betätigung des Wegeventils 86' erfolgt wiederum über Betätigungsanschlüsse 92', 94'. Die effektiven Betätigungsflächen dieser hydraulischen Betätigungsanschlüsse 92, 94 können identisch sein, so dass das Wegeventil 86' (wie auch das Wegeventil 86 der Fig. 2) in Abhängigkeit von einem direkten Druckvergleich an den Druckanschlüssen der Pumpen 42, 66 geschaltet wird. Die Vorsteuerflächen, die in Fig. 3 mit a, b schematisch angedeutet sind, können jedoch auch unterschiedlich sein, so dass das Wegeventil 86' in Abhängigkeit nicht nur von den Drücken an den Druckanschlüssen der Pumpen 42, 66 betätigt wird, sondern auch in Abhängigkeit von dem Verhältnis der Vorsteuerflächen a, b.

Dies kann dazu genutzt werden, dass auch in der zweiten Stellung 90' des Wegeventils 86' der von der Sekundärpumpe 66 bereitgestellte Druck gleich oder größer dem Druck sein kann, der zur gleichen Zeit von der Hauptpumpe 42 bereitgestellt wird. Hierdurch kann die Verzweigungsaktuatorik 36 in der zweiten Stellung 90' des Wegeventils 86' mit einem Hydraulikdruck versorgt werden, der unabhängig ist von dem Hydraulikdruck, der an dem Druckanschluss der Hauptpumpe 42 bereitgestellt wird.

Bei den obigen Ausführungsformen ist die Sekundärpumpe 66 als unidirektionale Pumpe verbunden, deren Druckanschluss mit dem hydraulischen Verbraucherabschnitt 48 und der Leistungsverzweigungseinrichtung 26 verbunden ist.

Die Sekundärpumpe 66 könnte jedoch, wie es in Fig. 3 gestrichelt dargestellt ist, auch als bidirektionale Pumpe mit einem ersten Anschluss 101 und einem zweiten Anschluss 102 ausgebildet sein, die jeweils über Rückschlagventile 104, 106 mit dem Fluidsumpf 44 verbunden sind, um einen hydraulischen Kurzschluss der bidirektionalen Sekundärpumpe 66 zu vermeiden.

Ferner ist der erste Anschluss 101 in diesem Fall in der Regel direkt mit der Systemdruckregelung 54 des hydraulischen Verbraucherabschnittes 48 verbunden, wie es in Fig. 3 gestrichelt dargestellt ist. Der zweite Anschluss 102 ist in der Regel direkt, d.h. ohne Zwischenschaltung eines Ventils, mit dem Steueranschluss 82 für die Verzweigungsaktuatorik 36 verbunden. Bei dieser Variante mit einer bidirektionalen Sekundärpumpe 66 ist die Ventilanordnung 86' folglich nicht notwendig.

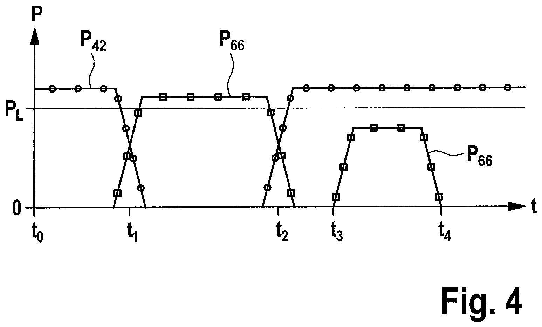

In Fig. 4 ist ein Zeitablaufdiagramm von Druck über Zeit dargestellt, wobei zum einen ein System- bzw. Leitungsdruck PL angezeigt ist, der in der Systemdruckregelung 54 erzeugt wird.

Bei P42 ist beispielhaft der Verlauf eines Druckes am Druckanschluss der Hauptpumpe 42 gezeigt. Zum Zeitpunkt t0 ist der Druck P42 größer als PL, so dass aus dem Druck P42 der Systemdruck PL abgeleitet werden kann. Gleiches gilt für die Phase nach dem Zeitpunkt t2.

Zu dem dazwischenliegenden Zeitpunkt t-i fällt der Druck P42 auf Null ab, bspw. durch Abschalten des Verbrennungsmotors. Um in diesem Fall den Systemdruck nach wie vor aufrechterhalten zu können, wird die Sekundärpumpe 66 angetrieben und erzeugt an ihrem Druckanschluss einen Druck P66, der vorzugsweise ebenfalls oberhalb des Leistungsdruckes PL liegt, um diesen aus dem Druck P66 ableiten zu können.

Nach dem Zeitpunkt t2, während die Hauptpumpe in Betrieb ist und der Druck P42 größer ist als PL, kann eine Situation auftreten, bei der die Leistungsverzweigungseinrichtung angesteuert werden muss, um bspw. die Antriebsleistung an das auf das Achsen 28, 32 zu verteilen.

In diesem Fall wird bspw. zum Zeitpunkt t3 die Sekundärpumpe P66 angetrieben, um die Verzweigungsaktuatorik 36 mit Hydraulikdruck zu versorgen. Ab dem Zeitpunkt t4 ist eine Ansteuerung der Verzweigungsaktuatorik 36 nicht mehr erforderlich, so dass die Sekundärpumpe P66 hiernach nicht mehr angetrieben wird.

Zwischen t3 und t4 ist der Druck P66 vorzugsweise kleiner als der Leitungsdruck PL, jedenfalls kleiner als der Druck P42. Dies gewährleistet bei der Ausführungsform der Fig. 2, dass das Wegeventil 86 in der zweiten Stellung 90 verbleibt.

Sofern die Vorsteuerflächen a, b geeignet unterschiedlich gewählt sind, könnte der Druck P66 in dem Zeitraum von t3 bis t4 auch größer sein als der Leitungsdruck PL und größer als der Druck P42 der Hauptpumpe 42. Dies kann insbesondere dann vorteilhaft sein, wenn der von der Hauptpumpe 42 bereitgestellte Druck P42 eine Funktion der Drehzahl des Verbrennungsmotors 14 ist, also im Fahrbetrieb in Abhängigkeit von der Drehzahl schwankt. Durch Einstellung der Vorsteuerflächen a, b kann für diesen Fall erreicht werden, dass die Sekundärpumpe 66 dennoch immer einen geeigneten Druck über ein Wegeventil 86, 86' bereitstellen kann.

## Patentansprüche

1. Antriebsstrang (12) für ein Kraftfahrzeug (10), mit
- einem Antriebsmotor (14) zum Bereitstellen von Antriebsleistung,
- einer Getriebeanordnung (16) zum Einrichten eines Übersetzungsverhältnisses zwischen dem Antriebsmotor (14) und Antriebsrädern (VL, VR, HL, HR), und
- einer Hydraulikanordnung (40) zum Betätigen von Komponenten der Getriebeanordnung (16),
wobei die Hydraulikanordnung (40) eine Hauptpumpe (42) aufweist, die mit einem hydraulischen Verbraucherabschnitt (48) verbunden ist, und
wobei die Hydraulikanordnung (40) eine Sekundärpumpe (66) aufweist, die bedarfsweise von einem Sekundärpumpen-Elektromotor (68) angetrieben ist und die mit dem Verbraucherabschnitt (48) verbunden ist, wobei
die Sekundärpumpe (66) mit einer Leistungsverzweigungseinrichtung (26) zum variablen Verteilen von Antriebsleistung auf zwei Achsen verbunden oder verbindbar ist,
**dadurch gekennzeichnet, dass** die Sekundärpumpe (66) über eine Ventilanordnung (86) mit der Leistungsverzweigungseinrichtung (26) verbunden ist und die Ventilanordnung ein Wegeventil (86) mit wenigstens einer ersten Stellung (88) und einer zweiten Stellung (90) aufweist, wobei die Sekundärpumpe (66) in der zweiten Stellung (90) mit der Leistungsverzweigungseinrichtung (26) verbunden ist und das Wegeventil (86) zum Einrichten der ersten und/oder der zweiten Stellung (88, 90) einen ersten und einen zweiten hydraulischen Betätigungsanschluss (92, 94) aufweist und der erste hydraulische Betätigungsanschluss (92) zum Einrichten der zweiten Stellung (90) mit einem Druckanschluss der Hauptpumpe (42) verbunden ist.

2. Antriebsstrang nach Anspruch 1, **dadurch gekennzeichnet, dass** der zweite hydraulische Betätigungsanschluss (94) zum Einrichten der ersten Stellung (88) mit einem Druckanschluss der Sekundärpumpe (66) verbunden ist.

3. Antriebsstrang nach einem der Ansprüche 1 oder 2, **dadurch gekennzeichnet, dass** die Sekundärpumpe (66) über das Wegeventil (86) mit dem Verbraucherabschnitt (48) verbunden ist.

4. Antriebsstrang nach einem der Ansprüche 1 bis 3, **dadurch gekennzeichnet, dass** ein Druckanschluss der Sekundärpumpe (66) über ein Rückschlagventil (70) mit dem hydraulischen Verbraucherabschnitt (48) verbunden ist.

5. Antriebsstrang nach einem der Ansprüche 1 - 4, **dadurch gekennzeichnet, dass** die Sekundärpumpe (66) als bidirektionale Pumpe mit einem ersten und einem zweiten Anschluss (101, 102) ausgebildet ist, wobei der erste Anschluss (101) mit dem hydraulischen Verbraucherabschnitt (48) verbunden ist und wobei der zweite Anschluss (102) mit der Leistungsverzweigungseinrichtung (26) verbunden ist.

6. Antriebsstrang nach einem der Ansprüche 1 - 5, **dadurch gekennzeichnet, dass** der Sekundärpumpen-Elektromotor (68) dazu ansteuerbar ist, um die Verteilung von Antriebsleistung bedarfsweise variabel einzustellen.

7. Verfahren zum Betreiben eines Fahrzeuges (10) mit einem Antriebsstrang (12) nach einem der Ansprüche 1 - 6, mit den Schritten:
- Erfassen des Betriebszustandes des Antriebsmotors (14),
- Ansteuern der Sekundärpumpe (66) zum Betätigen der Leistungsverzweigungseinrichtung (26), wenn der Antriebsmotor (14) in Betrieb ist und wenn wenigstens eine Anforderung einer Fahrdynamiksteuerung oder eine Fahrzeuggeschwindigkeit größer als eine Schwelle erfüllt ist, und
- Ansteuern der Sekundärpumpe (66) zum Versorgen des Verbraucherabschnittes (48), wenn der Antriebsmotor (14) außer Betrieb ist und wenn wenigstens eine weitere Bedingung erfüllt ist.

## Claims

1. Powertrain (12) for a motor vehicle (10), having
- a drive motor (14) for providing a drive output;
- a transmission assembly (16) for specifying a gearing ratio between the drive motor (14) and drive wheels (VL, VR, HL, HR); and
- a hydraulics assembly (40) for activating components of the transmission assembly (16);
wherein the hydraulics assembly (40) has a main pump (42) which is connected to a hydraulic consumer portion (48), and
wherein the hydraulics assembly (40) has a secondary pump (6) which according to requirements is powered by a secondary-pump electric motor (68) and which is connected to the consumer portion (48), wherein
the secondary pump (66) is connected or capable of being connected to an output transfer installation (26) for variably distributing drive output to two axles,
**characterized in that** the secondary pump (66) is connected to the output transfer installation (26) by way of a valve assembly (86), and the valve assembly has a directional valve (86) having at least a first position (88) and a second position (90), wherein the secondary pump (66) in the second position (90) is connected to the output transfer installation (26), and the directional valve (86) for specifying the first and/or the second position (88, 90) has a first and a second hydraulic activation connector (92, 94), and the first hydraulic activation connector (92) for specifying the second position (90) is connected to a pressure connector of the main pump (42).

2. Powertrain (1) according to Claim 1, **characterized in that** the second hydraulic activation connector (94) for specifying the first position (88) is connected to a pressure connector of the secondary pump (66).

3. Powertrain according to one of Claims 1 or 2, **characterized in that** the secondary pump (66) is connected to the consumer portion (48) by way of the directional valve (86).

4. Powertrain according to one of Claims 1 to 3, **characterized in that** a pressure connector of the secondary pump (66) is connected to the hydraulic consumer portion (48) by way of a check valve (70).

5. Powertrain according to one of Claims 1 to 4, **characterized in that** the secondary pump (66) is configured as a bidirectional pump having a first and a second connector (101, 102), wherein the first connector (101) is connected to the hydraulic consumer portion (48), and wherein the second connector (102) is connected to the output transfer installation (26).

6. Powertrain according to one of Claims 1 to 5, **characterized in that** the secondary-pump electric motor (68) is actuatable so as to variably set the distribution of drive output according to requirements.

7. Method for operating a vehicle (10) having a powertrain (12) according to one of Claims 1 to 6, said method comprising the following steps:
- detecting the operating state of the drive motor (14);
- actuating the secondary pump (66) for activating the output transfer installation (26) when the drive motor (14) is in operation and when at least one of a requirement by a vehicle dynamics control unit or a vehicle speed above a threshold value is met; and
- actuating the secondary pump (66) for supplying the consumer portion (48) when the drive motor (14) is out of operation and at least one further condition is met.

## Revendications

1. Chaîne cinématique (12) pour un véhicule automobile (10), comprenant
- un moteur d'entraînement (14) pour fournir une puissance d'entraînement,
- un agencement de transmission (16) pour configurer un rapport de démultiplication entre le moteur d'entraînement (14) et les roues motrices (VL, VR, HL, HR), et
- un agencement hydraulique (40) pour actionner des composants de l'agencement de transmission (16),
l'agencement hydraulique (40) présentant une pompe principale (42) qui est connectée à une partie consommateur hydraulique (48), et
l'agencement hydraulique (40) présentant une pompe secondaire (66) qui est entraînée au besoin par un moteur électrique de pompe secondaire (68) et qui est connectée à la partie consommateur (48),
la pompe secondaire (66) étant ou pouvant être connectée à un dispositif de ramification de puissance (26) pour distribuer de manière variable la puissance d'entraînement sur deux axes,
**caractérisée en ce que** la pompe secondaire (66) est connectée par le biais d'un agencement de soupape (86) au dispositif de ramification de puissance (26) et l'agencement de soupape présente une soupape de distribution (86) avec au moins une première position (88) et une deuxième position (90), la pompe secondaire (66), dans la deuxième position (90), étant connectée au dispositif de ramification de puissance (26) et la soupape de distribution (86) présentant, pour configurer la première et/ou la deuxième position (88, 90), un premier et un deuxième raccord d'actionnement hydraulique (92, 94) et le premier raccord d'actionnement hydraulique (92), pour configurer la deuxième position (90), étant connecté à un raccord de pression de la pompe principale (42).

2. Chaîne cinématique selon la revendication 1, **caractérisée en ce que** le deuxième raccord d'actionnement hydraulique (94), pour configurer la première position (88), est connecté à un raccord de pression de la pompe secondaire (66).

3. Chaîne cinématique selon l'une quelconque des revendications 1 et 2, **caractérisée en ce que** la pompe secondaire (66) est connectée à la partie consommateur (48) par le biais de la soupape de distribution (86).

4. Chaîne cinématique selon l'une quelconque des revendications 1 à 3, **caractérisée en ce qu'**un raccord de pression de la pompe secondaire (66) est connecté à la partie consommateur hydraulique (48) par le biais d'un clapet antiretour (70).

5. Chaîne cinématique selon l'une quelconque des revendications 1 à 4, **caractérisée en ce que** la pompe secondaire (66) est réalisée sous forme de pompe bidirectionnelle avec un premier et un deuxième raccord (101, 102), le premier raccord (101) étant connecté à la partie consommateur hydraulique (48) et le deuxième raccord (102) étant connecté au dispositif de ramification de puissance (26).

6. Chaîne cinématique selon l'une quelconque des revendications 1 à 5, **caractérisée en ce que** le moteur électrique de pompe secondaire (68) peut être commandé de manière à ajuster de manière variable au besoin la répartition de la puissance d'entraînement.

7. Procédé pour faire fonctionner un véhicule (10) comprenant une chaîne cinématique (12) selon l'une quelconque des revendications 1 à 6, comprenant les étapes suivantes :
- détection de l'état de fonctionnement du moteur d'entraînement (14),
- commande de la pompe secondaire (66) pour actionner le dispositif de ramification de puissance (26) lorsque le moteur d'entraînement (14) fonctionne et qu'au moins une exigence de commande dynamique de conduite ou une vitesse du véhicule supérieure à un seuil est satisfaite, et
- commande de la pompe secondaire (66) pour alimenter la partie consommateur (48) lorsque le moteur d'entraînement (14) ne fonctionne pas et qu'au moins une condition supplémentaire est satisfaite.
